# EUROPÄISCHE PATENTSCHRIFT

(11) **EP 3 089 335 B1**
(45) Veröffentlichungstag und Bekanntmachung des Hinweises auf die Patenterteilung: **20.02.2019**
(21) Anmeldenummer: 15166084.2
(22) Anmeldetag: 30.04.2015
(51) Int. Cl.: H02K 15/02, B32B 7/12, B32B 15/08, B32B 15/01, B32B 38/04

(54) **VORRICHTUNG UND VERFAHREN ZUM VERBINDEN VON BLECHTEILEN ZU EINEM BLECHPAKET**
DEVICE AND METHOD FOR CONNECTING SHEET METAL TO A SHEET PACKAGE
DISPOSITIF ET PROCÉDÉ DE LIAISON DE PARTIES DE TÔLES À UN PAQUET DE TÔLES

(43) Veröffentlichungstag der Anmeldung: 02.11.2016
(73) Patentinhaber: voestalpine Automotive Components Dettingen GmbH & Co. KG, 72581 Dettingen an der Erms (DE)
(72) Erfinder: Kauffmann, Jochen, 73061 Ebersbach (DE); Lanksweirt, Jochen, 89522 Heidenheim (DE); Bursy, Heinrich, 73268 Erkenbrechtsweiler (DE)
(74) Vertreter: Jell, Friedrich

(56) Entgegenhaltungen:
- EP-A1- 1 868 016
- EP-A1- 2 450 189
- WO-A1-2014/089593
- WO-A2-2012/027856
- DE-A1- 2 411 560
- JP-A- S5 450 919
- US-A1- 2013 316 122

## Beschreibung

Die Erfindung betrifft eine Vorrichtung und ein Verfahren zum Verbinden von Blechteilen zu einem Blechpaket, bei dem Blechteile von einem Elektroband freigestanzt werden, die freigestanzten Blechteile gestapelt und zu mehreren Blechpaketen zumindest stoffschlüssig verbunden werden, wobei zumindest zwischen zwei gestapelten Blechteilen ein Trennmittel vorgesehen wird, um die Trennung der stoffschlüssig verbundenen Blechteile in Blechpakete zu erleichtern.

Um die beim Stanzpaketieren vor- oder selbst endverklebten Blechteile in Blechpakete auftrennen zu können, ist es aus dem Stand der Technik bekannt (WO2014/089593A1), zwischen zwei in einer als Paketbremse ausgeführten Stapeleinrichtung eines Folgestanzwerkzeugs gestapelten Blechteilen ein Trennmittel vorzusehen. Dies geschieht, indem vor dem Folgestanzwerkzeug eine Trennfolie als Trennmittel auf das Elektroband bereichsweise auflaminiert wird, welches Trennmittel auf dem freigestanzten Blechteil als Trennhilfe zwischen in der Stapeleinrichtung aneinander anschließenden Blechpaketen dient. Nachteilig bedarf es bei der Applizierung des Trennmittels einer exakten Positionierung in Hinblick auf jenes abzutrennende Blechteil, das als Ende oder Anfang eines Blechpakets die Teilung der Blechpakete in der Paketbremse markiert. Diese Positionierung ist daher verfahrenstechnisch vergleichsweise aufwendig und bedarf diverser Steuerungs- und/oder Regelkreise, um beispielsweise Abweichungen im Vorschub des Elektrobands kompensieren zu können - was eine Voraussetzung für den Erhalt formgenauer Blechpakete ist.

Ein Stand der Technik nach dem Oberbegriff des Anspruchs 1 und 10 ist aus der JP S54 50919 A bekannt.

Die Erfindung hat sich daher die Aufgabe gestellt, ein Verfahren der eingangs geschilderten Art derart zu verbessern, dass die Applikation eines Trennmittels reproduzierbar erfolgen kann. Zudem soll die Applikation eines Trennmittels in der Handhabung einfach sein.

Die Erfindung löst die gestellte Aufgabe hinsichtlich des Verfahrens durch die kennzeichnenden Merkmale des Anspruchs 1.

Wird mit der Stanzstufe zum Freistanzen des Blechteils das Trennmittel von einem Endlosband sowohl freigestanzt als auch auf dem Blechteil vorgesehen, kann zunächst eine verfahrenstechnisch einfache Lösung zur Applikation eines Trennmittels zwischen zwei Blechteilen vorgegeben werden. Es bedarf nämlich im Gegensatz zum Stand der Technik nicht eines eigenen Verfahrenschritts zur Applikation des Trennmittels, da für diese Applikation jener Verfahrenschritt, der beim Freistanzen des Blechteils Verwendung findet, mitgenutzt werden kann. Die Handhabung des erfindungsgemäßen Verfahrens kann dadurch erheblich erleichtert werden. Besonders aber kann sich die Erfindung gegenüber dem Stand der Technik abheben, da mit der Applikation des Trennmittels in der Stanzstufe zum Freistanzen des Blechteils sichergestellt werden kann, dass das Trennmittel stets an jenem freigestanzten Blechteil vorgesehen wird, bei dem die Trennung der gestapelten Blechteile zu maßgenauen Blechpakete zu erfolgen hat. Die Verlagerung der Applikation des Trennmittels zum letzen Stanzschritt des Blechteils bzw. zu seinem Freistanzen kann nämlich das Verfahren beispielsweise von eventuell vorhandenen Toleranzen in einem vorhergehenden Verfahrensschritt entkoppeln. Trotz einer vergleichsweise einfachen Handhabung des Verfahrens kann damit eine besonders hohe Reproduzierbarkeit gewährleist werden. Derartige Blechpakete, insbesondere Elektroblechpakete, sind daher für elektrische Maschinen bzw. elektrische bzw. elektromagnetische Anwendungen besonders geeignet.
Indem das Trennmittel vom unterhalb des Elektrobands geführten Endlosband freigestanzt wird, kann das Endlosband durch die Druckbelastung aufgrund des Elektrobands eingespannt und damit formgenau von der Stanzstufe freigestanzt werden. Im Allgemeinen wird erwähnt, dass es sich beim Elektroband um ein Halbzeug aus Stahl, beispielsweise als kaltgewalztes nicht kornorientiertes Elektroband im schlussgeglühten Zustand (DIN EN10106) oder als kornorientiertes Elektroband im schlussgeglühten Zustand (DIN EN10107) ausgeführt, handeln kann.
Zudem wird im Allgemeinen erwähnt, dass das Endlosband im Trägermaterial Kunststoff, Gewebe, Papier, Backpapier oder eine Kombination daraus mit oder ohne Beschichtung aufweisen kann. Als Endlosband kann beispielsweise ein von einer Vorratsrolle abgezogenes Band verstanden werden, beispielsweise in Form einer Folie. Im Allgemeinen ist jedoch jede Form und/oder jedes Material als Endlosband vorstellbar, aus dem ein Trennmittel freigestanzt werden kann, das die Trennung der stoffschlüssig verbundenen Blechteile in Blechpakete erleichtert, beispielsweise durch Verringerung der Haftung zu mindestens einem der an das Trennmittel angrenzenden Blechteile. Hierfür ist beispielsweise eine Antihaftbeschichtung auf mindestens einer Flachseite des Endlosbands bzw. des Trennmittels denkbar.

Diese Reproduzierbarkeit kann auch dann erhalten bleiben, wenn die Blechteile aus dem Elektroband folgegestanzt werden, da wie bereits erwähnt, die vorhergehenden Verfahrenschritte auf eine positionsgenaue Applikation des Trennmittels auf die Blechteile erfindungsgemäß keinen Einfluss nehmen können.

Vorzugsweise wird das Elektroband vor dem Freistanzen wenigstens bereichsweise mit einer aushärtbaren, polymeren Klebstoffschicht beschichtet, um das stoffschlüssige Verbinden der Blechteile zu formstabilen Blechpaketen zu unterstützen. Als Klebstoffschicht kann sich bevorzugt eine, insbesondere heißhärtende, Backlackschicht eignen. Im Allgemeinen wird erwähnt, dass die Klebstoffschicht einseitig oder bevorzugt beidseitig auf die Flachseite des Elektrobands vorgesehen sein kann.

Bevorzugt wird das Trennmittel auf der Klebstoffschicht des Blechteils aufgebracht, um dieses nach dem Freistanzen am Blechteil zu fixieren. Eine korrekte Führung des Trennmittels beim Stapeln der Blechteile kann damit sichergestellt werden. Besonders kann dies von Vorteil sein, wenn die Blechpakete segmentierte Lagen aus mehreren Blechteilen aufweisen und beim Stapeln der Blechteile die Blechpakete bewegt bzw. gedreht werden müssen. Die erfindungsgemäß am Blechteil fixierten Trennmittel können dieser Bewegung sicher folgen - was die Reproduzierbarkeit des Verfahrens weiter erhöhen kann.

Verlaufen die Vorschubrichtungen von Endlosband und Elektroband in der Stanzstufe geneigt, insbesondere normal, zueinander, kann man die Führung des Endlosbands von jener des Elektrobands trennen und so die Handhabung des Verfahrens weiter vereinfachen.

Diese Formgenauigkeit des Trennmittels kann weiter erhöht werden, wenn Elektroband und Endlosband beim Freistanzen gemeinsam niedergehalten werden.

Ein eventuelles Haften des Endlosbands am Elektroband, beispielsweise an seinem Stanzgrad, kann einfach gelöst werden, wenn nach dem Freistanzen das Elektroband vom Endlosband weggehoben wird. Die Gefahr eines Bandrisses am Endlosband kann damit verringert werden, was die Reproduzierbarkeit des Verfahrens erhöhen kann.

Um das Trennmittel nach dem Trennen der Blechpaktete auf einfache Weise vom Blechpaket zu entfernen, kann vorgesehen werden, dass das Trennmittel mit einer Antihaftbeschichtung versehen wird. Außerdem kann diese Antihaftbeschichtung der einfachen Trennung der Blechpakete dienlich sein.

Wird das Endlosband vor dem Freistanzen des Trennmittels der Kontur des Blechteils folgend angeschnitten, kann eine hohe Maßgenauigkeit am Trennmittel sichergestellt werden. Dadurch kann es beispielsweise auch vorstellbar sein, das Trennmittel am Blechpaket haftend zu lassen und dieses beispielsweise als Schutz des Blechpakets nützen.

Die Erfindung hat sich außerdem die Aufgabe gestellt, eine Vorrichtung zum Verbinden von Blechteilen zu einem Blechpaket derart konstruktiv zu verändern, dass die Applikation eines Trennmittels exakt erfolgen kann, um formgenaue Blechpakete herstellen zu können. Zudem soll die Vorrichtung konstruktiv einfach ausgestaltet sein.

Die Erfindung löst die gestellte Aufgabe hinsichtlich der Vorrichtung durch die kennzeichnenden Merkmale des Anspruchs 10.

Indem die Zuführeinrichtung ein Endlosband aufweist und dieses der Stanzstufe derart zuführt, dass mit dieser Stanzstufe das Trennmittel vom Endlosband sowohl freigestanzt als auch auf dem Blechteil vorgesehen wird, kann im Gegensatz zum Stand der Technik sichergestellt werden, dass das Trennmittel stets an jenem freigestanzten Blechteil vorgesehen wird, bei dem die Trennung der gestapelten Blechteile zu maßgenauen Blechpakete zu erfolgen hat. Zudem ist diese Zuführung des Endlosbands konstruktiv vergleichsweise einfach zu lösen, zumal damit auf die Führung des Elektrobands nicht Rücksicht genommen werden muss. Es kann sich auf diese Weise zudem eine besonders standfeste Vorrichtung ergeben.
Indem das Trennmittel vom unterhalb des Elektrobands geführten Endlosband freigestanzt wird, kann das Endlosband durch die Druckbelastung aufgrund des Elektrobands eingespannt und damit formgenau von der Stanzstufe freigestanzt werden.

Verlaufen die Vorschubrichtungen des Elektrobands und des Endlosbands in der Stanzstufe geneigt, insbesondere normal, zueinander, kann der konstruktive Aufwand zum Erhalt einer getrennten Führung von Elektroband und Endlosband weiter vermindert werden.

Außerdem kann das Trennmittel vom unterhalb des Elektrobands geführten Endlosband sicher freigestanzt werden, wenn die Stanzstufe einen Niederhalter aufweist, wobei der Niederhalter an einer Schneide der Stanzstufe zum gemeinsamen Freistanzen von Trennmittel und Blechteil befestigt ist.

In den Figuren ist der Erfindungsgegenstand beispielsweise anhand einer Ausführungsvariante dargestellt. Es zeigen
- Fig. 1: eine schematische Ansicht auf eine Vorrichtung zur Bleckpaketierung und
- Fig. 2: eine Draufsicht auf das Folgestanzwerkzeug der Vorrichtung nach Fig. 1,
- Fig. 3: eine abgerissene Detailansicht zur Paketbremse der Fig. 1,
- Fig. 4: eine abgerissene Seitansicht zur Stanzstufe der Vorrichtung nach Fig. 1 und
- Fig. 5: eine abgerissene Seitenansicht einer zur Stanzstufe der Fig. 4 konstruktiv anderen Stanzstufe nach dem erfindungsgemäßen Ausführungsbeispiel.

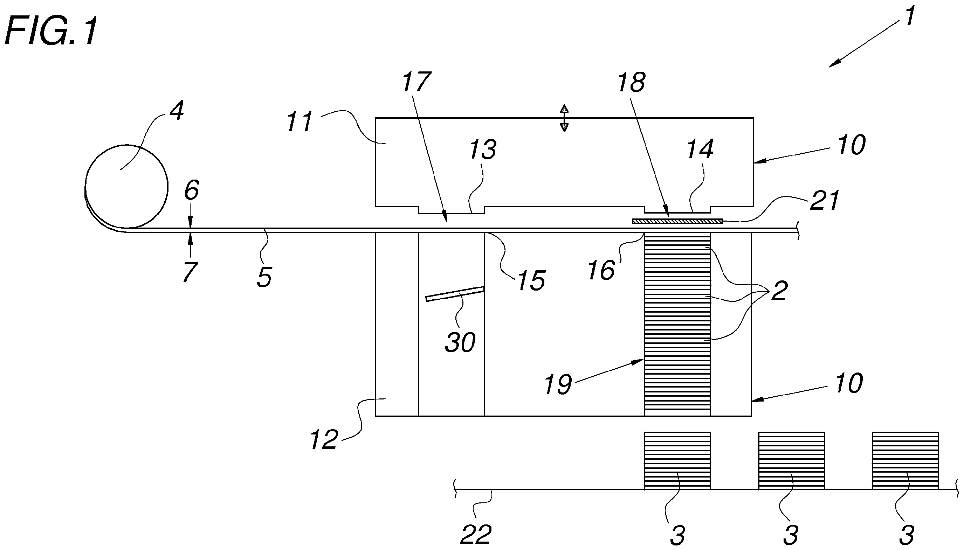

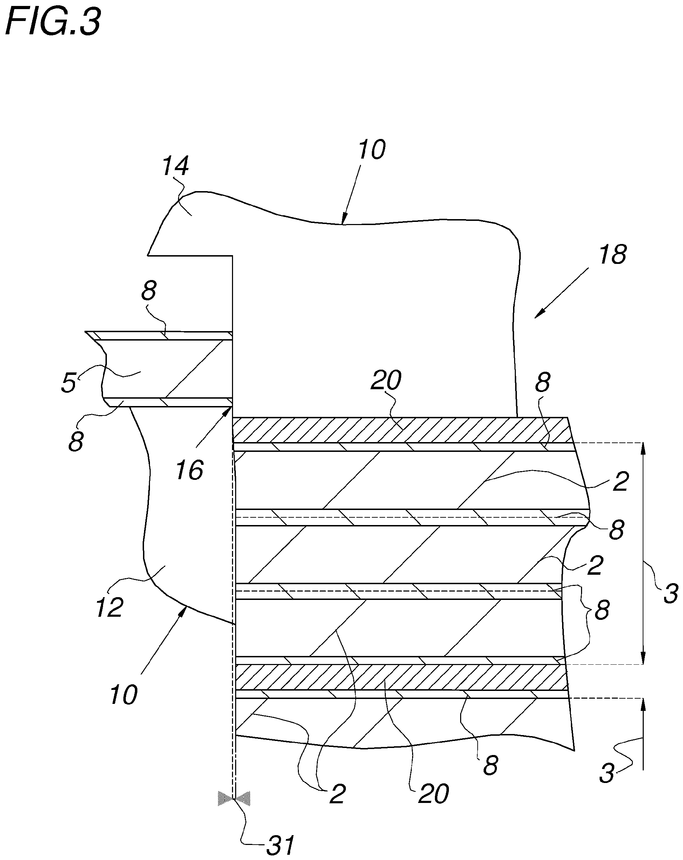

Gemäß Fig. 1 wird eine Vorrichtung 1 schematisch dargestellt. Diese Vorrichtung 1 dient zum Paketieren von freigestanzten Blechteilen 2 zu Blechpaketen 3. Hierzu wird von einem Coil 4 ein Elektroband 5 abgehaspelt, welches auf beiden Bandseiten 6, 7 eine vollflächige polymeren Klebstoffschicht 8, nämlich einen heißhärtenden Backlack, aufweist, welche Klebstoffschicht 8 beispielsweise in der Fig. 3 zu erkennen ist. Vom backlackbeschichteten Elektroband 5 werden mithilfe eines Folgestanzwerkzeugs 10 mehrere Blechteile 2 freigestanzt. Solch ein Freigestanzten kann - im Allgemeinen erwähnt - ein Ausschneiden, Abschneiden, Ausklinken, Beschneiden, Zerteilen durch Ausdrücken etc. sein.

Wie außerdem in der Fig. 1 zu entnehmen ist, führt das Stanzwerkzeug 10, beispielsweise hier ein Folgestanzwerkzeug, ein Schneiden mit mehren Hüben durch, indem sein Oberwerkzeug 11 mit seinem Unterwerkzeug 12 zusammenwirkt. Mit einer ersten Schneide 13 des Oberwerkzeugs 11 wird das Elektroband 5 für ein Freistanzen vorbearbeitet, wonach mit einer zweiten Schneide 14 des Oberwerkzeugs 11 aus dem Elektroband 5 das Blechteil 2 freigestanzt bzw. damit vereinzelt wird. Hierzu wirken die Schneiden 13, 14 mit den jeweiligen Matrizen 15, 16 des Unterwerkzeugs 12 zusammen und bilden damit im Stanzwerkzeug 10 zwei Stanzstufen 17, 18 aus.

Solch ein Folgeschneiden ist in der Fig. 1 daran zu erkennen, dass beim Vorbearbeiten ein Teil 30 vom Elektroband 5 abgetrennt werden, um das Elektroband 5 für das Freistanzen des Blechteils 2 vorzubereiten. Danach werden mithilfe der Stanzstufen 18 die Blechteile 2 freigestanzt und durch Druck des Oberwerkzeugs 11 in eine Stapeleinrichtung 19 gedrängt und dort gestapelt, die eine sich teilweise verjüngende Führung 31 im Unterwerkzeug 12 aufweist. Diese Führung 31 im Unterwerkzeug übt die Wirkung einer Paketbremse auf die Blechteile 2 aus, wodurch die Blechteile 2 unter Druck des Oberwerkzeugs 11 und mithilfe der zwischen den Blechteilen 2 vorhandenen polymeren Klebstoffschicht 8 eine feste physikalische und/oder chemische Verbindung eingehen. Im Allgemeinen wird erwähnt, dass die Stapeleinrichtung 19 auch aktiv beheizt werden kann, um die stoffschlüssige Verbindung der Blechteile 2 zu verbessern.

Außerdem können die Blechpakete 3 nicht näher dargestellten weiteren Aushärtungsschritten unterworfen werden, um die stoffschlüssige Verbindung zwischen den Blechteilen 2 zu stärken. Nicht näher dargestellt ist außerdem die Möglichkeit, einer Drehung der Stapeleinrichtung 19, um beispielsweise segmentierte Blechpakete 3 aus Lagen mit mehreren nebeneinander angeordneten und übereinander gestapelten Blechteilen 2 auszubilden. Im Allgemeinen wird erwähnt, dass - nicht dargestellt - alternativ zur Verjüngung auch ein Gegenhalter in der Führung vorstellbar ist, der einen entsprechenden Gegendruck zum stoffschlüssigen Verbinden der Blechteile 2 ausübt.

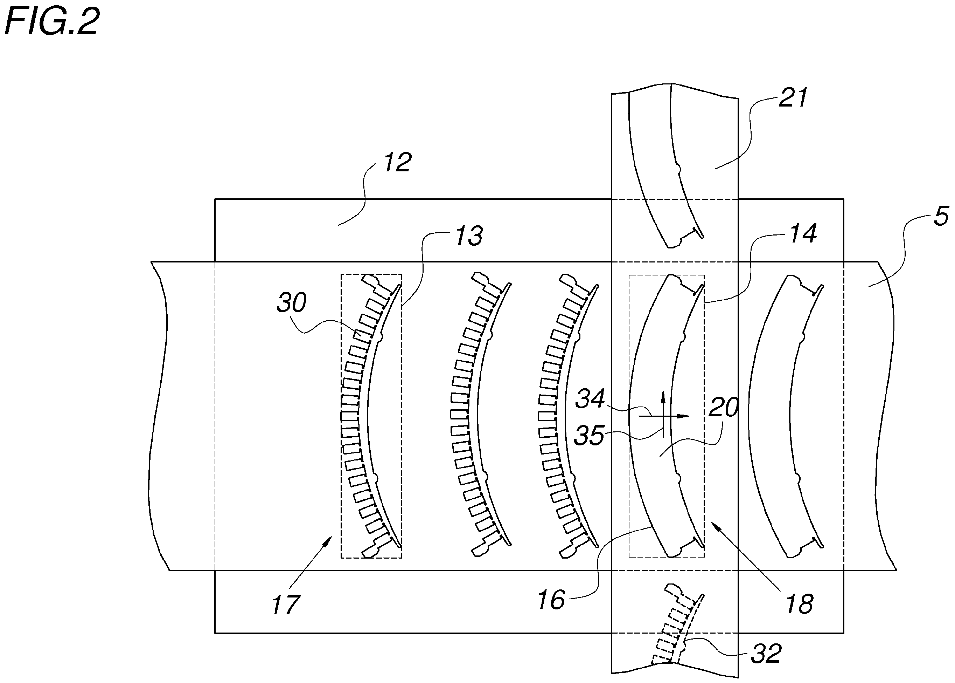

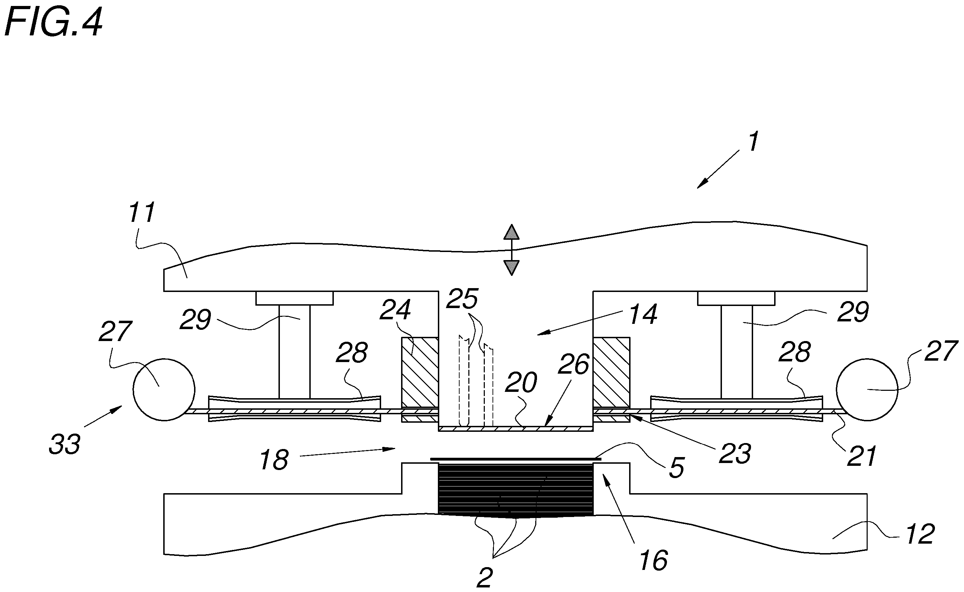

Um die, die Stapeleinrichtung 19 verlassenden Blechpakete 3 leichter voneinander trennen zu können, wird zumindest zwischen zwei gestapelten Blechteilen 2 über eine Zuführeinrichtung 33 ein Trennmittel 20 vorgesehen, das beispielsweise in Fig. 2 und 4 zu erkennen ist.

Dies wird mithilfe der Stanzstufe 18 durchgeführt, mit der das Trennmittel 20 von einem Endlosband 21, beispielsweise von einem aufgerollten silikonbeschichteten Backpapier, freigestanzt wird - wie anhand von Fig. 2 in Draufsicht auf das Unterwerkzeug 12 das Stanzwerkzeug 10 näher dargestellt. So drückt die in Fig. 2 strichliert eingezeichnete Schneide 14 auf das Endlosband 21 und in weiterer Folge auf das Elektroband 5 und stanzt im Zusammenwirken mit der Matrize 16 des Unterwerkzeugs 12 sowohl das Trennmittel 20 als auch das Blechteil 2 frei. Entsprechend dieser nach den Figuren 1 bis 3 dargestellten Ausführungsform wird sohin das Trennmittel 20 vom oberhalb des Elektrobands 5 geführten Endlosband 21 freigestanzt. Zusätzlich wird mit diesem Freistanzen auch das Trennmittel 20 am freigestanzten Blechteil 2 bzw. an dessen Klebstoffschicht 8 angebracht und in die Stapeleinrichtung 19 eingebracht. Mit einem nachfolgend weiteren freigestanzten Blechteil 2 dient dieses Trennmittel 20 als Teilung zwischen den angrenzenden Blechteilen 2. Damit befindet sich auch das Trennmittel 20 zwischen zwei Blechteilen 2 in der Stapeleinrichtung 19, welcher struktureller Aufbau beispielsweise in der Fig. 3 unterhalb des vollständig dargestellten Blechpakets 3 zu erkennen ist, das auch das gerade eben von der Stanzstufe 18 freigestanzte Blechteil 2 mitumfasst. Eine zuverlässige Teilung der gestapelten und stoffschlüssig verbundenen Blechteile 2 in präzise Blechpakete 3 ist damit möglich - insbesondere auch dort, wo die Blechteile 2 die Stapeleinrichtung 19 verlassen und diese beispielsweise zum Weitertransport auf einem Förderband 22 vorgesehen werden.

Gemäß Fig. 2 wird ein Trennmittel 20 vom Endlosband 21 freigestanzt, das vollflächig der negativen Außenkontur des ausgestanzten Blechteils 2 folgt. Es ist aber auch denkbar, wie dies am Endlosband 21 der Fig. 2 strichliert angedeutet, das Endlosband 21 bereits mit einer Ausnehmung 32 anzuschneiden, bevor dieses der Stanzstufe 18 zugeführt wird. Damit wird mit der Stanzstufe 18 ein Trennmittel 20 freigestanzt, das der Kontur des Blechteils 2 folgt bzw. diesem auch nach dem Anbringen nicht vorsteht. Dies ist insbesondere bei Innenkonturen am Blechpaket 3 von Vorteil, die in weiterer Folge vom Trennmittel 20 auch nicht überdeckt werden. Dadurch ist beispielsweise vorstellbar, das Trennmittel 20 an einem Blechpaket 3 haften und damit verbleiben zu lassen. Selbstverständlich ist vorstellbar, das Trennmittel 20 vom Blechpaket 3 auch abzuziehen, was mit einem beidseitig antihaftbeschichteten Trennmittel 20 (z.B.: beidseitig silikonbeschichteten Backpapier) erleichtert werden kann.

Zudem ist nach Fig. 4 zu erkennen, dass die Schneide 14 der Stanzstufe 18 das Trennmittel 20 vor dem Blechteil 2 freistanzt. Hierzu wird das Endlosband 21 von der Zuführeinrichtung 33 durch einen Führungsspalt 23 des Niederhalters 24 geführt und so der Stanzstufe 18 zu- bzw. abgeführt. Zudem kann Niederhalter 24 gegenüber der Schneide 14 verlagert werden, wodurch das Trennmittel 20 von der Stanzstufe 18 freigestanzt werden kann. Das freigestanzte Trennmittel 20 wird in weiterer Folge durch in Unterdruckdüsen endenden Unterdruckleitungen 25 an der Formfläche 26 der Schneide 14 festgehalten und damit zumindest bis zum Elektroband 5 standfest geführt, wonach dann das Blechteil 2 vom Elektroband 5 freigestanzt wird. Zudem wird das auf Rollen 27 auf- und abgewickelte Endlosband 21 mit Führungselementen 28 an Führungssäulen 29 gegenüber dem Niederhalter 24 ausgerichtet.

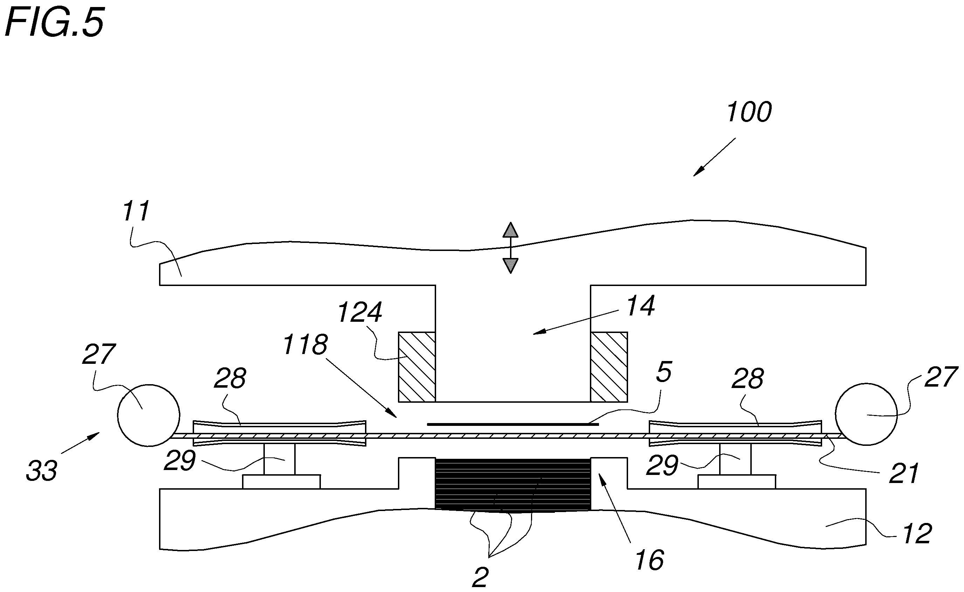

Im Vergleich zur Fig. 4 ist in Fig. 5 eine konstruktiv anders ausgeführte Stanzstufe 118 der erfindungsgemäßen Vorrichtung 100 näher dargestellt. Bei dieser Stanzstufe 118 wird zum Unterschied zur Stanzstufe 18 der Vorrichtung 1 das Endlosband 21 von der Zuführeinrichtung 33 unter dem Elektroband 5 geführt und so der Stanzstufe 118 zugeführt. Daher wird auch das Trennmittel 20 vom unterhalb des Elektrobands 5 geführten Endlosband 21 freigestanzt. Hierzu hält der an der Schneide 14 befestigte Niederhalter 124 das Elektroband 5 und das Endlosband 21 gemeinsam nieder. Das Endlosband 21 wird auch ähnlich zur Vorrichtung 1 mit Führungselementen 28 der Stanzstufe 118 zugeführt. Indem diese Führungselemente 28 auf Führungssäulen 29 gelagert sind, kann nach dem Freistanzen das Endlosband 21 vom Elektroband 5 weggehoben werden, um ein eventuelles Anhaften des Endlosbands 21 am Elektroband 5 zu lösen. Das Endlosband 21 nimmt daher - beispielsweise durch nicht näher dargestellte Stanzgrade - am Elektroband 5 keinen Schaden.

Wie außerdem in der Fig. 2 für alle Ausführungsbeispiele gültig zu entnehmen, verlaufen die Vorschubrichtungen 34, 35 des Elektrobands 5 und des Endlosbands 21 in der Stanzstufe 18 bzw. 118 geneigt bzw. normal zueinander. Damit kann die Zuführung des Endlosbands 21 zur diesbezüglichen Stanzstufe 18 bzw. 118 konstruktiv einfach gelöst werden.

## Patentansprüche

1. Verfahren zum Verbinden von Blechteilen (2) zu einem Blechpaket (3), bei dem Blechteile (2) von einem Elektroband (5) freigestanzt werden, die freigestanzten Blechteile (2) gestapelt und zu mehreren Blechpaketen (3) zumindest stoffschlüssig verbunden werden, wobei zumindest zwischen zwei gestapelten Blechteilen (2) ein Trennmittel (20) vorgesehen wird, um die Trennung der stoffschlüssig verbundenen Blechteile (2) in Blechpakete (3) zu erleichtern, wobei mit der Stanzstufe (118) zum Freistanzen des Blechteils (2) das Trennmittel (20) von einem Endlosband (21) sowohl freigestanzt als auch auf dem Blechteil (2) vorgesehen wird, **dadurch gekennzeichnet, dass** das Trennmittel (20) vom unterhalb des Elektrobands (5) geführten Endlosband (21) freigestanzt wird.

2. Verfahren nach Anspruch 1, **dadurch gekennzeichnet, dass** die Blechteile (2) aus dem Elektroband (5) folgegestanzt werden.

3. Verfahren nach Anspruch 1 oder 2, **dadurch gekennzeichnet, dass** das Elektroband (5) vor dem Freistanzen wenigstens bereichsweise mit einer aushärtbaren, polymeren Klebstoffschicht (8) beschichtet wird.

4. Verfahren nach Anspruch 3, **dadurch gekennzeichnet, dass** das Trennmittel (20) auf der Klebstoffschicht (8) des Blechteils (2) aufgebracht wird.

5. Verfahren nach einem der Ansprüche 1 bis 4, **dadurch gekennzeichnet, dass** die Vorschubrichtungen (34, 35) von Endlosband (21) und Elektroband (5) in der Stanzstufe (118) geneigt, insbesondere normal, zueinander verlaufen.

6. Verfahren nach einem der Ansprüche 1 bis 5, **dadurch gekennzeichnet, dass** Elektroband (5) und Endlosband (21) beim Freistanzen gemeinsam niedergehalten werden.

7. Verfahren nach einem der Ansprüche 1 bis 6, **dadurch gekennzeichnet, dass** nach dem Freistanzen das Elektroband (5) vom Endlosband (21) weggehoben wird.

8. Verfahren nach einem der Ansprüche 1 bis 7, **dadurch gekennzeichnet, dass** das Trennmittel (20) mit einer Antihaftbeschichtung versehen wird.

9. Verfahren nach einem der Ansprüche 1 bis 8, **dadurch gekennzeichnet, dass** das Endlosband (21) vor dem Freistanzen des Trennmittels (20) der Kontur des Blechteils (2) folgend angeschnitten wird.

10. Vorrichtung zum Verbinden von Blechteilen (2) zu einem Blechpaket (3) mit einem Stanzwerkzeug (10), das eine Stanzstufe (118) zum Freistanzen eines Blechteils (2) aus einem Elektroband (5) aufweist, mit einer Stapeleinrichtung (31) zum Stapeln und insbesondere zumindest stoffschlüssigen Verbinden der freigestanzten Blechteile (2) zu mehreren Blechpaketen (3) und mit einer Zuführeinrichtung (33) zum Vorsehen eines Trennmittels (20) zwischen mindestens zwei in der Stapeleinrichtung (31) gestapelten Blechteilen (2), um die Trennung der stoffschlüssig verbundenen Blechteile (2) in Blechpakete (3) zu erleichtern, wobei die Zuführeinrichtung (33) ein Endlosband (21) aufweist und dieses der Stanzstufe (118) derart zuführt, dass mit dieser Stanzstufe (118) das Trennmittel (20) vom Endlosband (21) sowohl freigestanzt als auch auf dem Blechteil (2) vorgesehen wird **dadurch gekennzeichnet, dass** die Stanzstufe (118) das Trennmittel (20) vom, von der Zuführeinrichtung (33) unterhalb des Elektrobands (5) geführten Endlosband (21) freistanzt.

11. Vorrichtung nach Anspruch 10, **dadurch gekennzeichnet, dass** die Vorschubrichtungen (34, 35) des Elektrobands (5) und des Endlosbands (21) in der Stanzstufe (118) geneigt, insbesondere normal, zueinander verlaufen.

12. Vorrichtung nach Anspruch 10 oder 11, **dadurch gekennzeichnet, dass** die Stanzstufe (118) einen Niederhalter (124) aufweist, wobei der Niederhalter (124) an einer Schneide (14) der Stanzstufe (118) zum gemeinsamen Freistanzen von Trennmittel (20) und Blechteil (2) befestigt ist.

## Claims

1. Method for joining sheet-metal parts (2) to form a stack of sheets (3), in which sheet-metal parts (2) are punched free from an electrical steel strip (5), the punched-free sheet-metal parts (2) are stacked and joined to form a plurality of stacks of sheets (3) at least in a material-locking manner, wherein a separating means (20) is provided at least between two stacked sheet-metal parts (2) in order to facilitate the separation of the sheet-metal parts (2), which are connected in a material-locking manner, into stacks of sheets(3), wherein the separating means (20) is provided with the punching stage (118) for free punching of the sheet-metal part (2) both from an endless strip (21) and on the sheet-metal part (2), **characterized in that** the separating means (20) is freely punched from the endless strip (21), which is guided underneath the electrical steel strip (5).

2. Method according to claim 1, **characterized in that** the sheet metal parts (2) are subsequently punched from the electrical steel strip (5).

3. Method according to claim 1 or 2, **characterized in that** the electrical steel strip (5) is coated at least in regions with a curable, polymeric adhesive layer (8) before the free punching.

4. Method according to claim 3, **characterized in that** the separating means (20) is applied to the adhesive layer (8) of the sheet-metal part (2).

5. Method according to one of claims 1 to 4, **characterized in that** the feed directions (34, 35) of endless strip (21) and electrical steel strip (5) in the punching stage (118) extend in an inclined manner, more particularly normal, to one another.

6. Method according to one of claims 1 to 5, **characterized in that** electrical steel strip (5) and endless strip (21) are held down together during free punching.

7. Method according to one of claims 1 to 6, **characterized in that** after the free punching the electrical steel strip (5) is lifted away from the endless strip (21).

8. Method according to one of claims 1 to 7, **characterized in that** the separating means (20) is provided with a non-stick coating.

9. Method according to one of claims 1 to 8, **characterized in that** the endless strip (21) is cut following the contour of the sheet metal part (2) before the separating means (20) is punched free.

10. Device for connecting sheet metal parts (2) to form a stack of sheets (3) with a punching tool (10), which has a punching stage (118) for free punching a sheet metal part (2) from an electrical steel strip (5), having a stacking device (31) for stacking and, more particularly, at least material-locked connecting of the free-punched sheet metal parts (2) to form a plurality of stacks of sheets (3), and having a feed device (33) for providing a separating means (20) between at least two sheet metal parts (2) stacked in the stacking device (31) in order to facilitate the separation of the sheet metal parts (2), which are connected in a material-locking manner, into stacks of sheets (3), wherein the feed device (33) has an endless strip (21) and feeds said strip to the punching stage (118) in such a way that with this punching stage (118) the separating means (20) is both punched free from the endless strip (21) and provided on the sheet metal part (2), **characterized in that** the punching stage (118) punches free the separating means (20) from the endless strip (21) which is guided below the electrical steel strip (5) by the feed device (33).

11. Device according to claim 10, **characterized in that** the feed directions (34, 35) of the electrical steel strip (5) and of the endless strip (21) in the punching stage (118) extend in a inclined manner, more particularly normal, with respect to one another.

12. Device according to claim 10 or 11, **characterized in that** the punching stage (118) has a hold-down device (124), wherein the hold-down device (124) is fastened to a cutting edge (14) of the punching stage (118) for the joint free punching of separating means (20) and sheet metal part (2).

## Revendications

1. Procédé pour assembler des pièces de tôle (2) pour former un paquet de tôles (3), dans lequel les pièces de tôle (2) sont découpées dans un feuillard de tôle magnétique (5), les pièces de tôle (2) découpées sont empilées et reliées au moins par solidarité de matière pour former plusieurs paquets de tôles (3), dans lequel un moyen de séparation (20) est prévu au moins entre deux pièces de tôle (2) empilées pour faciliter la séparation des pièces de tôle (2) reliées par solidarité de matière en paquets de tôles (3), dans lequel, le poste de découpe (118) pour découper la pièce de tôle (2) découpe le moyen de séparation (20) dans une bande sans fin (21) et le dispose sur la pièce de tôle (2), **caractérisé en ce que** le moyen de séparation (20) est découpé dans la bande sans fin (21) guidée sous le feuillard de tôle magnétique (5).

2. Procédé selon la revendication 1, **caractérisé en ce que** les pièces de tôle (2) sont découpées à la suite dans le feuillard de tôle magnétique (5).

3. Procédé selon la revendication 1 ou 2, **caractérisé en ce que** le feuillard de tôle magnétique (5) est enduit avant la découpe, au moins par zones, d'une couche d'adhésif polymère durcissable (8).

4. Procédé selon la revendication 3, **caractérisé en ce que** le moyen de séparation (20) est appliqué sur la couche d'adhésif (8) de la pièce de tôle (2).

5. Procédé selon l'une des revendications 1 à 4, **caractérisé en ce que** les directions d'avancement (34, 35) de la bande sans fin (21) et du feuillard de tôle magnétique (5) sont inclinées l'une vers l'autre dans le poste de découpe (118), en particulier perpendiculaires.

6. Procédé selon l'une des revendications 1 à 5, **caractérisé en ce que** le feuillard de tôle magnétique (5) et la bande sans fin (21) sont retenus ensemble lors de la découpe.

7. Procédé selon l'une des revendications 1 à 6, **caractérisé en ce que**, après la découpe, le feuillard de tôle magnétique (5) est soulevé de la bande sans fin (21).

8. Procédé selon l'une des revendications 1 à 7, **caractérisé en ce que** le moyen de séparation (20) est muni d'un revêtement antiadhésif.

9. Procédé selon l'une des revendications 1 à 8, **caractérisé en ce que** la bande sans fin (21) est entaillée avant la découpe du moyen de séparation (20) en suivant le contour de la pièce de tôle (2).

10. Dispositif pour assembler des pièces de tôle (2) pour former un paquet de tôles (3) avec un outil de découpe (10), qui comprend un posté de découpe (118) pour découper une pièce de tôle (2) dans un feuillard de tôle magnétique (5), avec une installation d'empilage (31) pour empiler et assembler au moins par solidarité de matière les pièces de tôle (2) découpées pour former plusieurs paquets de tôles (3) et avec une installation d'arrivée (33) pour disposer un moyen de séparation (20) entre au moins deux pièces de tôle (2) empilées dans l'installation d'empilage (31) afin de faciliter la séparation des pièces de tôle (2) assemblées par solidarité de matière en paquets de tôles (3), l'installation d'arrivée (33) comportant une bande sans fin (21) et amenant celle-ci au poste de découpe (118) de telle manière que dans ce poste de découpe (118), le moyen de séparation (20) soit découpé dans la bande sans fin (21) et disposé sur la pièce de tôle (2), **caractérisé en ce que** le poste de découpe (118) découpe le moyen de séparation (20) dans la bande sans fin (21) guidée par l'installation d'arrivée (33) en dessous du feuillard de tôle magnétique (5).

11. Dispositif selon la revendication 10, **caractérisé en ce que** les directions d'avancement (34, 35) de la bande sans fin (21) et du feuillard de tôle magnétique (5) sont inclinées l'une vers l'autre dans le poste de découpe (118), en particulier perpendiculaires.

12. Dispositif selon la revendication 10 ou 11, **caractérisé en ce que** le poste de découpe (118) comprend un dispositif d'appui (124), lequel dispositif d'appui (124) est fixé à une lame (14) du poste de découpe (118) pour découper ensemble le moyen de séparation (20) et la pièce de tôle (2).
